Europäisches Patentamt

European Patent Office

Office européen des brevets

(11) Veröffentlichungsnummer : **0 152 133
B1**

(12) **EUROPÄISCHE PATENTSCHRIFT**

(45) Veröffentlichungstag der Patentschrift :
**20.01.88**

(51) Int. Cl.⁴ : **C 01 F   7/50**

(21) Anmeldenummer : **85200071.0**

(22) Anmeldetag : **24.01.85**

(54) **Verfahren zur Herstellung von Aluminiumfluorid.**

(30) Priorität : **16.02.84 DE 3405452**

(43) Veröffentlichungstag der Anmeldung :
**21.08.85 Patentblatt 85/34**

(45) Bekanntmachung des Hinweises auf die Patenterteilung : **20.01.88 Patentblatt 88/03**

(84) Benannte Vertragsstaaten :
**AT DE FR GB IT NL SE**

(56) Entgegenhaltungen :
**FR-A- 2 077 351
FR-A- 2 088 300
FR-A- 2 119 040
US-A- 2 996 354
Die Akte enthält technische Angaben, die nach dem
Eingang der Anmeldung eingereicht wurden und die
nicht in dieser Patentschrift enthalten sind.**

(73) Patentinhaber : **METALLGESELLSCHAFT AG
Reuterweg 14 Postfach 3724
D-6000 Frankfurt/M.1 (DE)
AT DE FR GB IT NL SE
VEREINIGTE ALUMINIUM-WERKE AKTIENGESELLS-
CHAFT
Berlin - Bonn Postfach 2468 Georg-von-Boeselager-
Strasse 25
D-5300 Bonn 1 (DE)
AT DE FR GB IT NL SE
KAISER ALUMINUM & CHEMICAL CORPORATION
865 Kaiser Building 300 Lakeside Drive
Oakland California 94643 (US)
DE FR IT**

(72) Erfinder : **Sauer, Harald, Dr.
Ziegenhainer Strasse 205
D-6000 Frankfurt am Main (DE)**
Erfinder : **Anderson, John N.
40 Tartan Court
Chagrin Falls Ohio 44022 (US)**
Erfinder : **Kämpf, Fritz, Dr.
Reuterweg 1
D-4714 Selm-Bork (DE)**
Erfinder : **Bings, Hubert
Friedenstrasse 3
D-4670 Lünen (DE)**

(74) Vertreter : **Rieger, Harald, Dr.
Reuterweg 14
D-6000 Frankfurt am Main (DE)**

## Beschreibung

Die Erfindung betrifft ein Verfahren zur Herstellung von Aluminiumfluorid aus Aluminiumhydroxid bzw. -oxidhydrat und Fluorwasserstoff unter Verwendung einer aus Wirbelschichtreaktor, Zyklonabscheider und Rückführleitung gebildeten zirkulierenden Wirbelschicht.

Neben der Herstellung von Aluminiumfluorid aus fluorhaltigen Materialien durch Reaktion mit Mineralsäuren und anschließende Kristallisation (DE-AS 10 62 681), durch doppelte Umsetzung von Fluorverbindungen und Aluminiumchlorid (AT-PS 130 199, DE-PS 837 690, US-PS 1 881 430), durch Umsetzung von Tonerde oder Tonerdehydrat mit wäßriger Fluorwasserstoffsäure (DE-PS 12 20 839, DE-OS 15 92 099, 15 92 100, 15 92 195, US-PS 3 492 086), durch Zersetzung von Aluminiumalkoholaten mit Säuren (DE-AS 12 94 358) spielen insbesondere die Herstellungsverfahren unter Verwendung von Aluminiumoxidhydrat oder Aluminiumhydroxid und Fluorwasserstoff eine Rolle. Dabei kann die Reaktion in wäßriger Phase mit anschließender Kristallisation und gegebenenfalls Entwässerung durchgeführt werden (DE-PS 492 412). Die Reaktion kann aber auch bei erhöhten Temperaturen vorgenommen werden, so daß als Verfahrenserzeugnis trockenes Aluminiumfluorid gewonnen wird (GB-PS 328 688). Hierzu dienen insbesondere Wirbelschichtverfahren, bei denen Tonerde oder Aluminiumhydroxid bei erhöhten Temperaturen mit Fluorwasserstoffgas zur Reaktion gebracht werden (DE-PS 815 343, 10 92 889, GB-PS 656 374, FR-PS 1 011 544, 1 221 299, 1 517 952, US-PS 3 057 680). Ein mehrstufiges Verfahren zur Herstellung von Aluminiumfluorid aus Aluminiumoxidtrihydrat und teilweise dehydratisiertem Aluminiumoxidtrihydrat mit fluorwasserstoffhaltigem Gas beschreiben die DE-OS 1 908 585, die FR-OS 2 002 335 und die CA-PS 537 403.

Die vorstehend beschriebenen Verfahren mit Kristallisation und Trocknung des Aluminiumfluorids sind naturgemäß mehrstufig und daher apparativ aufwendig. Außerdem stellen sich erhebliche Abwasserprobleme oder es sind große Lösungsmittelmengen im Kreislauf zu fahren. Den Wirbelschichtverfahren ist gemeinsam, daß Fluorwasserstoffgas mit vergleichsweise hoher Konzentration erforderlich ist.

Ein weiteres Verfahren zur Herstellung von Aluminiumfluorid arbeitet mit der Zirkulierenden Wirbelschicht, wobei der Fluorwasserstoff in flüssiger Form direkt dem Wirbelbett oberhalb des Rostes, aber unterhalb der Feststoffrückführung zugeführt wird (DE-PS 21 06 306). Obwohl insbesondere dieses Verfahren vorteilhaft ist, weil die Flußsäure den hinsichtlich Korrosion kritischen Temperaturbereich von 60 bis 250 °C praktisch augenblicklich durchläuft und sofort auf Wirbelschichttemperatur gebracht wird, setzt es das Vorhandensein von Fluorwasserstoff in flüssiger Form voraus.

In jüngerer Zeit gewinnen die Verfahren zur Herstellung von Aluminiumfluorid unter Verwendung von Gasen, die relativ geringe Fluorwasserstoffkonzentrationen aufweisen, an Bedeutung. Derartige Gase stammen insbesondere aus Pyrohydrolyseprozessen von festen Rückständen der Aluminium-Industrie, wie z. B. aus sogenanntem Ofenausbruch, und enthalten je nach Verfahrensführung bei der Aufkonzentrierung und anschließenden Verdampfung nur 8 bis 12 Vol.-% oder 20 bis 25 Vol.-% Fluorwasserstoff. Zudem ist der Wasserdampfgehalt der Gase mit bis zu 70 Vol.-% sehr hoch. Infolge der genannten Besonderheiten treten bei der Herstellung von Aluminiumfluorid folgende Probleme auf:

Mit zunehmender Reaktionstemperatur im Aluminiumfluorid-Reaktor und zunehmendem Wasserdampfgehalt im Gas steigt der Fluorwasserstoff-Gleichgewichtspartialdruck im Abgas.

Das bedeutet, daß die Fluorwasserstoff-Ausbeute mit steigender Abgastemperatur und steigendem Wasserdampfgehalt drastisch abnimmt. Eine Reduzierung der Reaktionstemperatur wegen des weiterhin bestehenden Zieles, möglichst hochprozentiges Aluminiumfluorid von z. B. mindestens 90 Gew-% $AlF_3$ zu gewinnen, bringt nicht den erwünschten Erfolg, da zwar die Gleichgewichtsbedingungen für eine hohe Fluorwasserstoff-Ausbeute verbessert werden, aber die Umsetzungsgeschwindigkeit (Kinetik) des Prozesses erheblich abfällt. Ein Ausgleich für die stark abnehmende Reaktionsgeschwindigkeit durch höhere Feststoff-Verweilzeiten im Reaktor ist wegen der dann erforderlich werdenden Abmessungen technisch nicht realistisch.

Aufgabe der Erfindung ist es, ein Verfahren zur Herstellung von Aluminiumfluorid unter Verwendung niedrigprozentiger, Fluorwasserstoff enthaltender Gase bereitzustellen, das mit technisch sinnvollen Reaktorabmessungen durchführbar ist und eine möglichst hohe Fluorwasserstoff-Ausbeute bei gleichzeitiger Gewinnung eines hochprozentigen Produktes gestattet.

Die Aufgabe wird gelöst, indem das Verfahren der eingangs genannten Art entsprechend der Erfindung derart ausgestaltet wird, daß man das frisch aufgegebene Aluminiumhydroxid bzw. -oxidhydrat in einer ersten Stufe durch Zugabe von in einem Kühlkreislauf geführtem, bereits teilweise umgesetztem Aluminiumhydroxid mit den Fluorwasserstoff-haltigen Abgasen der zirkulierenden Wirbelschicht unter Ausbildung einer Gas/Feststoff-Suspension mit einer Mischtemperatur von 150 bis 250 °C in Kontakt bringt, den Feststoff vom Gasstrom abtrennt, mindestens einen Teil des abgeschiedenen Feststoffes über einen Kühler führt und gekühlten Feststoff erneut mit frisch zugeführtem Aluminiumhydroxid bzw. -oxidhydrat in Kontakt bringt und einen Teilstrom des abgeschiedenen Feststoffes der zirkulierenden Wirbelschicht zuleitet und dort bei einer Temperatur von mindestens 450 °C mit dem gasförmig eingetragenen Fluorwasserstoff einer Konzentration von maximal 25 Vol.-% umsetzt.

Zwar ist es bei der Herstellung von Aluminiumfluorid bekannt, Aluminiumoxid vor der Umsetzung mit 70 bis 80 %iger Flußsäure zunächst mit den Fluorwasserstoff-haltigen heißen Abgasen des Kalzinierofens in dessen Abgasrohr teilweise zur Reaktion zu bringen und zur Erzielung eines innigen Kontaktes zwischen Abgas und Aluminiumoxid eine geeignete Dimensionierung des Abgasrohres vorzunehmen (DE-AS 19 56 943). Jedoch ist dabei die gleichzeitige Zumischung von in einem Kühlkreislauf geführtem, bereits teilweise umgesetztem Aluminiumhydroxid nicht vorgesehen. Dies ist beim bekannten Verfahren auch nicht erforderlich, weil infolge der hohen Konzentration der dort eingesetzten Flußsäure das Verhältnis von Abgasstrom zu Aluminiumoxid wärmebilanzmäßig wesentlich günstiger ist.

Innerhalb des erfindungsgemäßen Verfahrens kann als festes Einsatzmaterial filterfeuchtes oder vorgetrocknetes Aluminiumhydroxid bzw. Aluminiumoxidhydrat verwendet werden.

Die Zugabemenge des im Kühlkreislauf geführten Aluminiumhydroxids richtet sich im wesentlichen nach der Temperatur des gekühlten Hydroxids und der Temperatur des die Gas/Feststoff-Suspension bildenden Gases. Entscheidend ist, daß eine Mischtemperatur von 150 bis 250 °C erzielt und dadurch die Fluorwasserstoff-Ausbeute in der ersten Stufe des Verfahrens erheblich gesteigert wird.

Eine Zweckmäßige Ausgestaltung der Erfindung sieht vor, den gesamten, aus der Gas/Feststoff-Suspension abgetrennten Feststoff über den Kühler zu führen. Hierdurch wird insbesondere sichergestellt, daß zur Kühlung des Abgases auf die erwünschte Temperatur eine jeweils ausreichende Materialmenge zur Verfügung steht.

Gemäß einer weiteren vorteilhaften Ausgestaltung der Erfindung wird die Umsetzung des gasförmig eingetragenen Fluorwasserstoffs in der zirkulierenden Wirbelschicht bei einer Temperatur im Bereich von 500 bis 600 °C durchgeführt. Dieser Temperaturbereich bewirkt einerseits eine ausreichend schnelle Reaktion und führt andererseits zu einem Abgas, dessen Temperatur ohne unnötigen Kühlaufwand innerhalb des Kühlkreislaufes eingestellt werden kann.

Eine vorteilhafte Ausführungsform der Erfindung besteht schließlich darin, den der zirkulierenden Wirbelschicht zuzuleitenden Teil des Feststoffes über den Abgasstrom der zirkulierenden Wirbelschicht unter Zwischenschaltung eines Abscheiders einzutragen. Auf diese Weise wird bereits eine beträchtliche Kühlung des Abgasstromes erzielt und darüber hinaus eine zusätzliche Reaktionsstrecke geschaffen.

Eine Variante des erfindungsgemäßen Verfahrens sieht vor, den aus dem Rückführzyklon der zirkulierenden Wirbelschicht austretenden Abgasstrom neben der Kühlung mit Aluminiumhydroxid zusätzlich durch Eintrag von kaltem Gas, z. B. von Luft von Umgebungstemperatur, zu kühlen. Hierdurch läßt sich die über den Kühlkreislauf zu fahrende Aluminiumhydroxid-Menge verringern. Insbesondere schafft diese Ausgestaltung eine von den Prozeß-Massenströmen unabhängige, zusätzliche Möglichkeit der Einflußnahme auf die Gastemperatur vor dem In-Kontakt-Bringen mit dem frischen Aufgabegut.

Als Kühler für das aus der Gas/Feststoff-Suspension abgeschiedene Aluminiumhydroxid kann jede für diese Zwecke bekannte Einrichtung verwendet werden. Besonders geeignet ist ein Wirbelschichtkühler mit gegebenenfalls mehreren, vom Aluminiumhydroxid nacheinander durchflossenen Kammern und miteinander verbundenen, in die einzelnen Kammern eintauchenden, von Wasser durchströmten Kühlflächen.

Die Ausgestaltung und Betriebsweise der zirkulierenden Wirbelschicht geschieht auf übliche Weise. Das heißt, der Wirbelschichtreaktor kann kreisförmigen, quadratischen oder rechteckigen Querschnitt aufweisen und zum Fluidisierungsgas-Eintrag einen Rost oder eine venturiartig ausgestaltete Eintragsvorrichtung besitzen. Reaktorfläche und Gasmenge werden in der Weise aufeinander abgestimmt, daß die mittlere Suspensionsdichte im Wirbelschichtreaktor etwa im Bereich von 50 bis 400 kg/m$^3$ Reaktorvolumen liegt. Hierbei ist zu berücksichtigen, daß bei der zirkulierenden Wirbelschicht — im Unterschied zur klassischen Wirbelschicht, die durch einen deutlichen Dichtesprung zwischen Wirbelbett und darüber befindlichem Gasraum gekennzeichnet ist —, der gesamte Wirbelschichtreaktor mit einer Gas/Feststoff-Suspension gefüllt ist und die Suspensionsdichte von unten nach oben abnimmt. (Über die Arbeitsweise von zirkulierenden Wirbelschichten vgl. L. Reh et al. « Wirbelschichtprozesse für die Chemie- und Hütten-Industrie, die Energieumwandlung und den Umweltschutz », Chem. Ing. Techn. 55 (1983) Nr. 2, Seiten 87-93.)

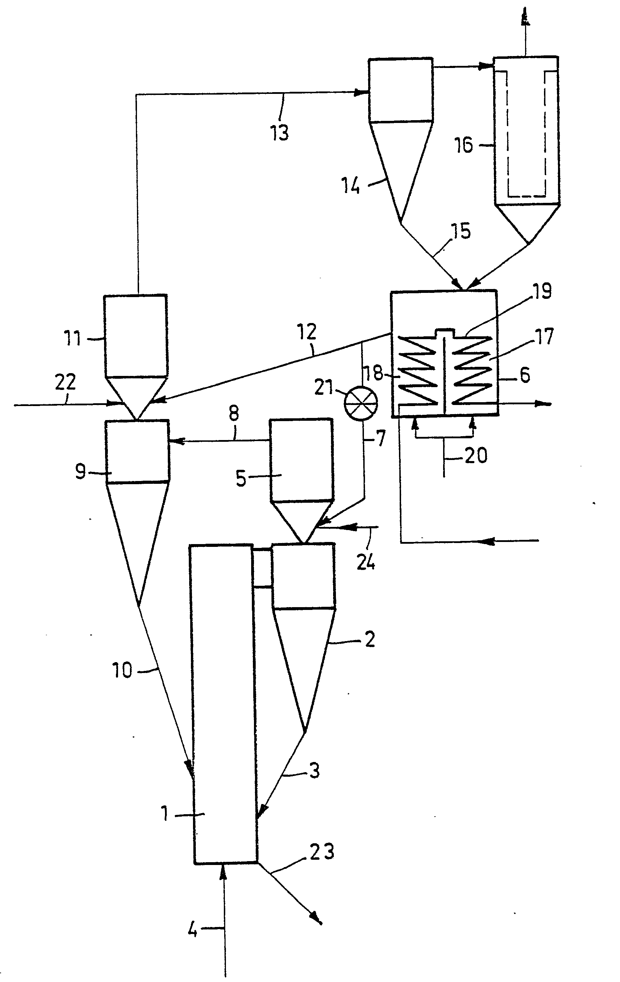

Die Erfindung wird anhand der Figur und der Ausführungsbeispiele beispielsweise und näher erläutert.

Die Figur zeigt ein Fließschema des erfindungsgemäßen Verfahrens in schematischer Darstellung.

Der aus dem Wirbelschichtreaktor 1, dem Rückführzyklon 2 und der Rückführleitung 3 gebildeten zirkulierenden Wirbelschicht wird über Leitung 4 fluorwasserstoffhaltiges Gas, das durch indirekte Beheizung oder Zumischen von Verbrennungsgas auf die erforderliche Temperatur gebracht sein kann, zugeführt. Das Abgas verläßt die zirkulierende Wirbelschicht über den Rückführzyklon 2 und wird im Venturi-Schwebeaustauscher 5 mit aus dem Wirbelschichtkühler 6 über Leitung 7 zugeführtem Feststoff versetzt. Die gebildete Gas/Feststoff-Suspension gelangt dann über Leitung 8 in den Zyklonabscheider 9, in dem der Feststoff abgetrennt und mittels Leitung 10 in die zirkulierende Wirbelschicht 1, 2, 3 eingetragen wird.

Bei der Variante der Verfahrensführung mit zusätzlicher Kühlung des den Rückführzyklon 2 verlassenden Gases wird kaltes Gas, z. B. Luft von Umgebungstemperatur, über Leitung 24 herangeführt.

Das Abgas des Zyklonabscheiders 9 wird in einem weiteren Venturi-Schwebeaustauscher 11 mit über Leitung 22 frisch aufgegebenem Aluminiumhydroxid bzw. -oxidhydrat und weiterem zur Einstellung der Temperatur aus dem Wirbelschichtkühler 6 über Leitung 12 herangeführtem Feststoff versetzt und erneut zu einer Gas/Feststoff-Suspension vermischt. Diese gelangt über Leitung 13 in den Zyklonabscheider 14, in dem Feststoff abgetrennt und über Leitung 15 dem Wirbelschichtkühler 6 zugeführt wird. Das Abgas wird schließlich in einem Feinstaubreiniger 16 (Tuchfilter oder Elektrofilter) gereinigt und zwecks Entfernung des restlichen Fluorwasserstoffs der Naß- oder Trockenwäsche (nicht dargestellt) zugeführt.

Der Wirbelschichtkühler 6 weist 2 Kühlkammern 17 und 18 auf, in die miteinander verbundene Kühlflächen 19 eintauchen. Die Zuführung der Fluidisierungsgase erfolgt über Leitung 20. Vermittels der Zellenradschleuse 21 wird der den Wirbelschichtkühler verlassende Feststoffstrom auf die Leitungen 7 und 12 aufgeteilt.

Das fertige Produkt wird der zirkulierenden Wirbelschicht über Leitung 23 entnommen.

Beispiel 1

Dem Wirbelschichtreaktor 1 der zirkulierenden Wirbelschicht werden über Leitung 4 6 906 $m_N$ $^3$/h Gas einer Temperatur von 570 °C und mit einem Gehalt von 10,1 Vol.-% HF zugeführt. Die Temperatur in der zirkulierenden Wirbelschicht beträgt 530 °C. Die mittlere Suspensionsdichte liegt bei 150 kg/m$^3$ Reaktorvolumen, die Umlaufrate des über Wirbelschichtreaktor 1, Rückführzyklon 2 und Rückführleitung 3 zirkulierenden Feststoffes bei dem 50-fachen der im Wirbelschichtreaktor 1 befindlichen Feststoffmenge.

Das Abgas der zirkulierenden Wirbelschicht tritt mit 530 °C und einer HF-Konzentration von 7,5 Vol.-% in den Venturi-Schwebeaustauscher 5 ein und wird dort mit 1 797 kg/h aus dem Wirbelschichtkühler 6 über Leitung 7 herangeführtem Feststoff von 100 °C versetzt. Dadurch kühlt sich das Gas auf 453 °C ab. Der im Zyklonabscheider 9 abgetrennte Feststoff gelangt über 10 in den Wirbelschichtreaktor 1 der zirkulierenden Wirbelschicht.

Das Abgas des Zyklonabscheiders 9, das einen BF-Gehalt von 4,0 Vol.-% aufweist, wird mit frischem Aluminiumhydroxid bzw. -oxidhydrat (1 030 kg/h ; 12,0 % Feuchte), das über Leitung 22 zugeführt wird und mit über Leitung 12 mit der Wirbelluft des Wirbelschichtkühlers 6 von 1 000 $m_N$ $^3$/h herangeführtem Feststoff (16 500 kg/h ; 100 °C) im Venturi-Schwebeaustauscher 11 versetzt. Es kühlt sich dabei auf 220 °C ab. Nach Durchgang durch den Zyklonabscheider 14 und den Feinstaubreiniger 16 wird es zu einer Trockenwäsche geführt. Es enthält 0,15 Vol.-% HF und fällt in einer Menge von 8 100 $m_N$ $^3$/h an.

Der in 14 und 16 abgeschiedene Feststoff, der mit einer Temperatur von 220 °C anfällt, wird im Wirbelschichtkühler 6 auf 100 °C gekühlt und — wie oben beschrieben — auf die Leitungen 7 und 12 im Verhältnis 1 : 9,2 aufgeteilt.

Als Produktion werden dem Wirbelschichtreaktor 1 über Leitung 23 937 kg/h Aluminiumfluorid entnommen. Es hat eine Reinheit von 91 % (Rest Al$_2$O$_3$ und Glühverlust).

Beispiel 2

Dieses Beispiel veranschaulicht die Ausgestaltung des erfindungsgemäßen Verfahrens mit zusätzlicher Luftkühlung. Die Bedingungen hinsichtlich Gaszufuhr und Betriebsweise der zirkulierenden Wirbelschicht stimmen mit denen gemäß Beispiel 1 überein.

Das Abgas der zirkulierenden Wirbelschicht tritt — wie in Beispiel 1 — mit 530 °C in den Venturi-Schwebeaustauscher 5 ein und wird dort mit 1 786 kg/h aus dem Wirbelschichtkühler 6 über Leitung 7 herangeführtem Feststoff von 100 °C versetzt. Zusätzlich werden über Leitung 24 1 052 $m_N$ $^3$/h Luft mit 40 °C zugeführt. Dadurch kühlt sich das Gas auf 420 °C ab. Der im Zyklonabscheider 9 abgetrennte Feststoff gelangt über 10 in den Wirbelschichtreaktor 1 der zirkulierenden Wirbelschicht.

Das Abgas des Zyklonabscheiders 9, das einen HF-Gehalt von 2,0 Vol.-% aufweist, wird mit frischem Aluminiumhydroxid bzw. -oxidhydrat (1 030 kg/h ; 12,0 % Feuchte), das über Leitung 22 zugeführt wird und mit über Leitung 12 mit der Wirbelluft des Wirbelschichtkühlers 6 von 1 000 $m_N$ $^3$/h herangeführtem Feststoff (15 900 kg/h ; 100 °C) im Venturi-Schwebeaustauscher 11 versetzt. Es kühlt sich dabei auf 220 °C ab. Nach Durchgang durch den Zyklonabscheider 14 und den Feinstaubreiniger 16 wird es zu einer Trockenwäsche geführt. Es enthält 0,13 Vol.-% HF und fällt in einer Menge von 9 150 $m_N$ $^3$/h an.

Der in 14 und 16 abgeschiedene Feststoff, der mit einer Temperatur von 220 °C anfällt, wird im Wirbelschichtkühler 6 auf 100 °C gekühlt und — wie oben beschrieben — auf die Leitungen 7 und 12 im Verhältnis 1 : 8,9 aufgeteilt.

Als Produktion werden dem Wirbelschichtreaktor 1 über Leitung 23 937 kg/h Aluminiumfluorid entnommen. Es hat eine Reinheit von 91 % (Rest Al$_2$O$_3$ und Glühverlust).

**Patentansprüche**

1. Verfahren zur Herstellung von Aluminiumfluorid aus Aluminiumhydroxid bzw. -oxidhydrat und Fluorwasserstoff unter Verwendung einer aus Wirbelschichtreaktor, Zyklonabscheider und Rückführleitung gebildeten zirkulierenden Wirbelschicht, dadurch gekennzeichnet, daß man das frisch aufgegebene Aluminiumhydroxid bzw. -oxidhydrat in einer ersten Stufe durch Zugabe von in einem Kühlkreislauf geführtem, bereits teilweise umgesetztem Aluminiumhydroxid mit den fluorwasserstoffhaltigen Abgasen der zirkulierenden Wirbelschicht unter Ausbildung einer Gas/Feststoff-Suspension mit einer Mischtemperatur von 150 bis 250 °C in Kontakt bringt, den Feststoff vom Gasstrom abtrennt, mindestens einen Teil des abgetrennten Feststoffes über einen Kühler führt und gekühlten Feststoff erneut mit frisch zugeführtem Aluminiumhydroxid bzw. -oxidhydrat in Kontakt bringt und einen Teilstrom des abgeschiedenen Feststoffes der Zirkulierenden Wirbelschicht zuleitet und dort bei einer Temperatur von mindestens 450 °C mit dem gasförmig eingetragenen Fluorwasserstoff einer Konzentration von maximal 25 Vol.-% umsetzt.

2. Verfahren nach Anspruch 1, dadurch gekennzeichnet, daß man den gesamten, aus der Gas/Feststoff-Suspension abgetrennten Feststoff über den Kühler führt.

3. Verfahren nach Anspruch 1 oder 2, dadurch gekennzeichnet, daß man die Umsetzung in der zirkulierenden Wirbelschicht bei 500 bis 600 °C durchführt.

4. Verfahren nach Anspruch 1, 2 oder 3, dadurch gekennzeichnet, daß man den der Zirkulierenden Wirbelschicht zuzuleitenden Teil des Feststoffes über den Abgasstrom der zirkulierenden Wirbelschicht unter Zwischenschaltung eines Abscheiders einträgt.

## Claims

1. A process of producing aluminum fluoride from aluminum hydroxide or alumina hydrate and hydrogen fluoride in a circulating fluidized bed system including a fluidized bed reactor, a cyclone separator and a recycling line, characterized in that partly reacted aluminum hydroxide circulated in a cooling cycle is added to fresh aluminum hydroxide or alumina hydrate in a first stage, in which the aluminum hydroxide is contacted with the hydrogen fluoride-containing exhaust gases from the circulating fluidized bed system so as to form a gas-solids suspension at a temperature of 150 to 250 °C, whereafter the solids are collected from the gas stream, at least part of the collected solids are passed through a cooler, cooled solids are re-contacted with fresh aluminum hydroxide or alumina hydrate, and a partial stream of the collected solids is supplied to the circulating fluidized bed system and is reacted therein at a temperature of at least 450 °C with hydrogen fluoride supplied in the form of a gas in a concentration up to 25 vol.%.

2. A process according to claim 1, characterized in that all solids collected from the gas-solids suspension are passed through the cooler.

3. A process according to claim 1 or 2, characterized in that the reaction in the circulating fluidized bed system is carried out at a temperature of 500 to 600 °C.

4. A process according to claim 1, 2 or 3, characterized in that that part of the solids which is to be supplied to the circulating fluidized bed system is introduced via the exhaust gas stream of the circulating fluidized bed system and an interposed separator.

## Revendications

1. Procédé de préparation du fluorure d'aluminium à partir d'hydroxyde d'aluminium ou d'hydrate d'oxyde d'aluminium et de fluorure d'hydrogène, en utilisant un lit fluidisé circulant constitué d'un réacteur à lit fluidisé, d'un séparateur à cyclone et d'un conduit de recyclage, caractérisé en ce qu'il consiste à mettre l'hydroxyde d'aluminium ou l'hydrate d'oxyde d'aluminium fraîchement chargé, en un premier stade, par addition d'hydroxyde d'aluminium passant dans un circuit de refroidissement et déjà partiellement transformé, en contact, à une température de mélange de 150 à 250 °C, avec les gaz résiduaires contenant du fluorure d'hydrogène du lit fluidisé circulant, avec formation d'une suspension gaz-matière solide, à séparer la matière solide du courant gazeux, à faire passer au moins une partie de la matière solide séparée dans un dispositif de refroidissement, et à remettre la matière solide refroidie en contact avec de l'hydroxyde d'aluminium ou de l'hydrate d'oxyde d'aluminium d'appoint frais, et à envoyer un courant partiel de la matière solide séparée au lit fluidisé circulant, et à l'y faire réagir, à une température de 450 °C au moins, sur le fluorure d'hydrogène introduit sous forme gazeuse, à une concentration de 25 % en volume au maximum.

2. Procédé suivant la revendication 1, caractérisé en ce qu'il consiste à faire passer, dans le dispositif de refroidissement, l'ensemble de la matière solide séparée de la suspension gaz/matière solide.

3. Procédé suivant la revendication 1 ou 2, caractérisé en ce qu'il consiste à effectuer la réaction dans le lit fluidisé circulant entre 500 et 600 °C.

4. Procédé suivant la revendication 1, 2 ou 3, caractérisé en ce qu'il consiste à charger la partie de la matière solide à envoyer au lit fluidisé circulant par le courant de gaz résiduaire du lit fluidisé circulant, avec interposition d'un séparateur.